# EUROPÄISCHE PATENTSCHRIFT

(11) **EP 1 383 319 B1**
(45) Veröffentlichungstag und Bekanntmachung des Hinweises auf die Patenterteilung: **12.09.2012**
(21) Anmeldenummer: 03016103.8
(22) Anmeldetag: 16.07.2003
(51) Int. Cl.: H04N 21/475, H04N 5/445, H04N 7/173, G08B 1/08, H04N 21/434, H04N 21/4227, H04N 21/61, H04N 21/454, H04N 21/441, H04N 21/45, H04N 21/442, H04N 5/44

(54) **Fernsehgerät mit Sicherheitsfunktion**
Television apparatus with security function
Récepteur de télévision avec fonction de sécurité

(30) Priorität: 18.07.2002 DE 10232575
(43) Veröffentlichungstag der Anmeldung: 21.01.2004
(73) Patentinhaber: Grundig Multimedia B.V., 1077 ZX Amsterdam (NL)
(72) Erfinder: Payer, Wolfgang, 91448 Emskirchen (DE); Finsterer, Harald, 90469 Nürnberg (DE)
(74) Vertreter: Louis Pöhlau Lohrentz

(56) Entgegenhaltungen:
- EP-A- 1 014 714
- EP-A- 1 134 972
- EP-A- 1 180 458
- WO-A-00/04709
- WO-A1-02/01864
- GB-A- 2 304 952
- US-B1- 6 195 004
- US-B1- 6 385 772

## Beschreibung

Die vorliegende Erfindung betrifft ein Fernsehgerät mit Sicherheitsfunktion.

Es sind Fernsehgeräte bekannt, die über eine Sicherheitsfunktion verfügen. Die Sicherheitsfunktion kann dabei eine sogenannte Kindersicherung betreffen. Die Kindersicherung ermöglicht es, daß Sendungen, die als kindergefährdend eingestuft worden und entsprechend codiert sind, nur dann mit dem Fernsehgerät mit Sicherheitsfunktion wiedergegeben werden können, wenn ein Kennwort eingegeben wird, das einen Benutzer des Fernsehgeräts mit Sicherheitsfunktion zur Wiedergabe entsprechender Sendungen autorisiert. Das Kennwort wird von berechtigten Benutzern festgelegt, z. B. von Erziehungsberechtigten, damit unberechtigte Benutzer, z. B. Kinder, keine kindergefährdenden Sendungen mit dem Fernsehgerät mit Sicherheitsfunktion wiedergeben können.

Bei den bekannten Fernsehgeräten mit Sicherheitsfunktion kann sich jedoch eine Sicherheitslücke ergeben, wenn sich z. B. der berechtigte Benutzer nicht in der Nähe des Fernsehgeräts mit Sicherheitsfunktion aufhält, da in diesem Fall von den unberechtigten Benutzern der Versuch unternommen werden könnte, die Sicherheitsfunktion zu umgehen. Ebenso kann es möglich sein, daß die unberechtigten Benutzer durch Zufall in den Besitz des Kennworts gelangen, wodurch sich ebenfalls eine Sicherheitslücke ergibt.

Aus WO 00/04709 A1 ist ein interaktives Fernsehprogrammführersystem, mit mehreren Geräten an einem Ort, bekannt. Das System beruht auf einer Mehrzahl von Benutzerfernsehausrüstungseinheiten, in welche ein Fernsehprogrammführersystem implementiert ist. Bei dem interaktiven Fernsehprogrammführersystem besteht die Möglichkeit einem jedem der Geräte eine Sicherheitsfunktion zuzuweisen, mittels derer ein Supervisor den Betrieb der Geräte überwachen kann.

Aus EP 1 014 714 A1 ist ein TV-Empfänger bekannt, welcher durch eine Steuereinheit zur Steuerung eines TV-Tuners enthält. Außerdem ist ein GPS-Empfänger angeordnet, der mit der Steuereinheit verbunden ist und der die Position des TV-Empfängers anhand von GPS-Empfangssignalen bestimmt.

Aus EP 1 134 972 A2 ist ein Verfahren und ein System zur Überwachung und zur Steuerung der Benutzung eines TV-Gerätes bekannt. Das System beinhaltet einen Empfänger zum Empfang von digitalen Fernsehsignalen, einen Video-Prozessor, der mit einem Tuner verbunden ist, ein Interface zur Eingabe von User-Befehlen und einen Controller zur Steuerung des TV-Gerätes. Der Controller überwacht die Nutzung des TV-Gerätes in Abhängigkeit von vorgegebenen Kriterien, welche von einem Systemadministrator eingegeben wurden.

Aus WO 02/01864 A1 ist ein Verfahren zur elterlichen Kontrolle und die entsprechende Vorrichtung bekannt, mit der ein Benutzer, z. B. ein Kind, an einem TV-Gerät eine geschützte Sendung entweder per Kennworteingabe freischalten kann oder aber am TV-Gerät den Versand einer SMS-Nachricht an einen berechtigten Benutzer, z. B. ein Elternteil, auslösen kann, damit dieser berechtigte Benutzer die entsprechende Sendung von seinem Mobilgerät aus freischaltet.

Es ist daher die Aufgabe der vorliegenden Erfindung, ein Fernsehgerät mit Sicherheitsfunktion anzugeben, dessen Sicherheitsfunktion dadurch geschützt ist, daß zu jeder Zeit eine Überwachung der Sicherheitsfunktion möglich ist, auch wenn sich kein berechtigter Benutzer in der Nähe des Fernsehgeräts mit Sicherheitsfunktion aufhält.

Bei der vorliegenden Erfindung wird diese Aufgabe durch die Merkmale des Anspruchs 1 gelöst.

Bei dem Fernsehgerät mit Sicherheitsfunktion wird dabei von der Überlegung ausgegangen, daß bei Vorliegen oder Vermuten einer Verletzung der Sicherheitsfunktion eine Meldung erzeugt wird, die an einen berechtigten Benutzer gesendet wird.

Der Vorteil der Erfindung ist darin zu sehen, daß der berechtigte Benutzer jederzeit einen Überblick hat, ob Versuche unternommen werden, die Sicherheitsfunktion zu umgehen, bzw. ob die Sicherheitsfunktion umgangen wurde. Dies erlaubt es dem berechtigen Benutzer Maßnahmen einzuleiten, welche geeignet sind die Sicherheitsverletzung zu beenden oder zukünftige Sicherheitsverletzungen zu vermeiden.

Bei einer bevorzugten Weiterentwicklung ist es vorgesehen, daß der berechtigte Benutzer Meldungen und/oder Steuerbefehle erzeugen kann, um diese an das Fernsehgerät mit Sicherheitsfunktion zu senden.

Damit ergibt sich für den berechtigten Benutzer die Möglichkeit, unmittelbar bei Vorliegen einer Sicherheitsverletzung zu reagieren und das Fernsehgerät mit Sicherheitsfunktion zu beeinflussen, auch wenn sich der berechtigte Benutzer nicht am Aufstellungsort des Fernsehgeräts mit Sicherheitsfunktion aufhält.

Weitere Vorteile der vorliegenden Erfindung ergeben sich aus den abhängigen Ansprüchen sowie der nachfolgenden Beschreibung von Ausführungsformen eines erfindungsgemäßen Fernsehgeräts anhand von Figuren.

Es zeigt:
- Figur 1: ein Prinzipschaltbild einer Ausführungsform eines Fernsehgeräts mit Sicherheitsfunktion, und
- Figur 2: ein Prinzipschaltbild einer weiteren Ausführungsform eines Fernsehgeräts mit Sicherheitsfunktion.

Zur Erleichterung des Verständnisses der vorliegenden Erfindung sind in den Figuren nur die Bestandteile der Ausführungsformen dargestellt, die im Zusammenhang mit der Erfindung von Bedeutung sind. Gleichartige Bestandteile in unterschiedlichen Figuren weisen die selben Bezugszeichen auf.

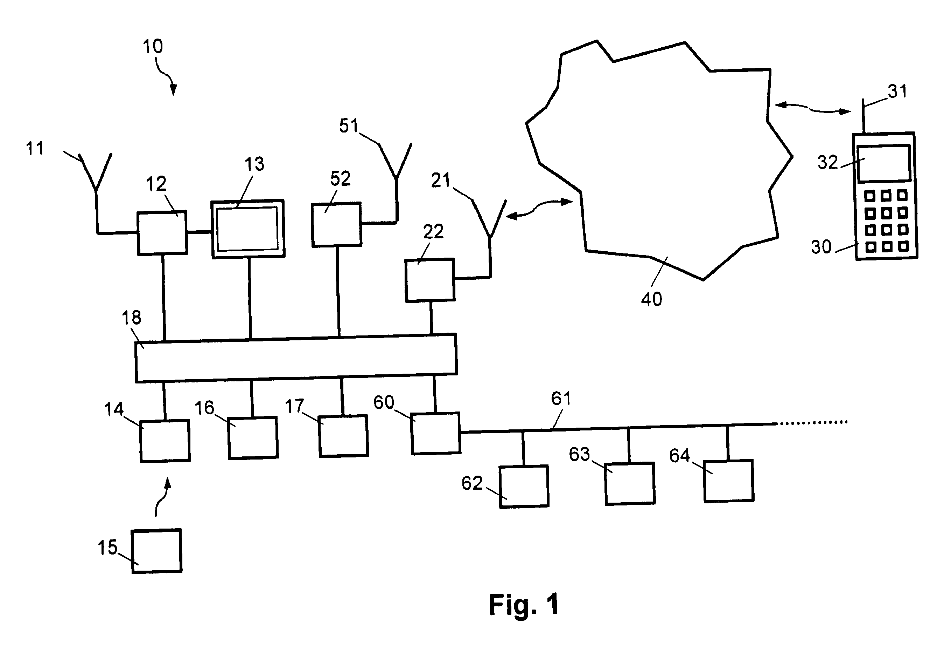

In Figur 1 ist ein Prinzipschaltbild einer Ausführungsform eines Fernsehgeräts mit Sicherheitsfunktion dargestellt.

Das Fernsehgerät 10 weist einen Signaleingang 11, beispielsweise eine Antenne, und eine Signalverarbeitungsschaltung 12 auf, um z. B. ein Fernsehsignal eines bestimmten Senders zu empfangen, der in einem bestimmten Programmplatz gespeichert ist, und für eine Wiedergabe aufzubereiten. Für die Wiedergabe des aufbereiteten Fernsehsignals weist das Fernsehgerät 10 beispielsweise eine Bildröhre 13 und Lautsprecher auf.

Für die Bedienung des Fernsehgeräts 10 ist eine Bedieneinheit 14, 15 vorgesehen, die z. B. aus einem Fernbedienungsgeber 15 und einem an eine Steuereinrichtung 18 angeschlossenen Fernbedienungsempfänger 14 bestehen kann. Fernbedienungsgeber 15 und Fernbedienungsempfänger 14 können drahtlos miteinander verbunden sein, z. B. über infrarote Signale. Mittels des Fernbedienungsgebers 15 können alle Funktionen des Fernsehgeräts 10 gesteuert werden, z. B. die Auswahl eines bestimmten wiederzugebenden Senders. d. h. dessen Programmplatz.

Die Bestandteile 12 bis 15 des Fernsehgeräts 10 werden von der Steuereinheit 18, z. B. einem Mikroprozessor, gesteuert und überwacht. Für den Betrieb des Mikroprozessors 18, d. h. für die Steuerung und Überwachung der Bestandteile 12 bis 15 des Fernsehgeräts 10, ist eine Software in einem Speicher 17 gespeichert. Der Speicher 17 ist ein nichtflüchtiger Speicher, z. B. EEPROM- oder Flash-Speicher, d. h. der nichtflüchtige Speicher 17 ist elektrisch löschbar bzw. beschreibbar. Für den Betrieb kann ein zusätzlicher Arbeitsspeicher 16, z. B. ein RAM-Speicher, vorgesehen sein. Die Software oder Teile davon werden dann für den Betrieb, d. h. zur Ausführung durch die Steuereinheit 18, aus dem nichtflüchtigen Speicher 17 in den Arbeitsspeicher 16 geladen.

Mittels des Fernbedienungsgebers 15 ist es ebenfalls möglich eine Sicherheitsfunktion, z. B. eine Kindersicherung, zu aktivieren und ein Kennwort einzugeben, das es erlaubt, die Kindersicherung zumindest zeitweise zu deaktivieren, beispielsweise für die Dauer einer als kindergefährdend eingestuften Sendung. Dadurch wird es einem berechtigten Benutzer ermöglicht, entsprechend geschützte Sendungen mit dem Fernsehgerät 10 mit Sicherheitsfunktion wiederzugeben, wohingegen ein unberechtigter Benutzer derartige Sendungen nicht wiedergeben kann, wenn die Kindersicherung aktiviert ist.

Das Kennwort wird unter Steuerung der Steuereinheit 18 im nichtflüchtigen Speicher 17 gespeichert. Ebenso überprüft die Steuereinheit 18 eine spätere Eingabe des Kennworts für eine vollständige oder zeitweise Deaktivierung der Kindersicherung durch Vergleich des eingegebenen Kennworts mit dem im nichtflüchtigen Speicher 17 gespeicherten Kennwort.

Bei der Wiedergabe von Sendungen mit dem Fernsehgerät 10 mit Sicherheitsfunktion werden von der Signalverarbeitungsschaltung 12 Codes aus dem Fernsehsignal abgetrennt, die Informationen über eine eventuelle Einstufung der Sendung als kindergefährdend enthalten können und an die Steuereinheit 18 geleitet. Liegt keine Codierung der Sendung als kindergefährdend vor, kann die Sendung ohne weiteres wiedergegeben werden. Liegt jedoch eine Codierung der Sendung als kindergefährdend vor, unterbleibt die Wiedergabe der Sendung und die Steuereinrichtung 18 erzeugt über die Signalverarbeitungsschaltung 12 eine Anzeige auf der Bildröhre 13, mit welcher der Benutzer des Fernsehgeräts 10 mit Sicherheitsfunktion aufgefordert wird, das Kennwort einzugeben, damit die Wiedergabe der Sendung freigegeben werden kann.

Zur Überwachung der Kindersicherung überprüft die Steuereinheit 18 z. B. alle Eingaben mit dem Fernbedienungsgeber 15, die im Zusammenhang mit der Bedienung der Kindersicherung stehen. Wird z. B. das Kennwort eingegeben oder wird mehrfach ein Kennwort eingegeben, das nicht mit dem im nichtflüchtigen Speicher 17 gespeicherten Kennwort übereinstimmt oder wird eine sonstige Manipulation vorgenommen, die dazu geeignet ist, eine an sich als kindergefährdend eingestufte Sendung wiederzugeben, erzeugt die Steuereinheit 18 eine Meldung, welche sie über einen Sender 22 und eine Antenne 21 über ein Funknetz 40 an eine Antenne 31 und einen externen Empfänger 30 sendet. Ist die Kindersicherung nicht aktiviert, kann es auch vorgesehen sein, daß immer dann eine Meldung von der Steuereinheit 18 erzeugt und gesendet wird, wenn eine Sendung wiedergegeben wird, die als kindergefährdend eingestuft und entsprechend codiert ist.

Der externe Empfänger 30 befindet sich im Besitz des berechtigten Benutzers, der das Kennwort der Kindersicherung vergeben hat. Beispielsweise mittels einer Anzeige 32 des externen Empfängers 30 wird die vom Fernsehgerät 10 mit Sicherheitsfunktion stammende Meldung angezeigt, um den berechtigten Benutzer über die Umgehung oder den Versuch einer Umgehung der Kindersicherung zu informieren. Die Meldung kann dazu z. B. Informationen enthalten, wie Datum und Uhrzeit der Umgehung, Sender, bzw. Programmplatz des Senders, der die als kindergefährdend eingestufte Sendung ausstrahlt usw. Die in der Meldung enthaltenen Informationen ermöglichen es somit, Rückschlüsse zu ziehen, die eine Identifizierung des unberechtigten Benutzers erlauben.

Da die geschilderte Überwachung des Fernsehgeräts 10 mit Sicherheitsfunktion nur bei Abwesenheit des berechtigen Benutzers erforderlich ist, kann die Versendung der Meldungen aktiviert bzw. deaktivert werden, wenn der berechtigte Benutzer abwesend bzw. anwesend ist. Bei Deaktivierung kann es zusätzlich vorgesehen sein, daß dennoch Meldungen von der Steuereinheit 18 erzeugt werden, diese aber nur im nichtflüchtigen Speicher 17 gespeichert werden. Somit können die in den Meldungen enthaltenen Informationen zu einem späteren Zeitpunkt ausgewertet werden, z. B. durch Anzeige auf der Bildröhre 13, falls der Verdacht entsteht, die Kindersicherung des Fernsehgeräts 10 mit Sicherheitsfunktion könnte umgangen worden sein.

Wird der externe Empfänger 30 zusätzlich mit einem Sender ausgerüstet und der Sender 22 des Fernsehgeräts 10 mit Sicherheitsfunktion zusätzlich mit einem Empfänger, können auch bei Abwesenheit des berechtigen Benutzers vom Aufstellungsort des Fernsehgeräts 10 mit Sicherheitsfunktion Maßnahmen eingeleitet werden, wenn die Kindersicherung umgangen wird. In diesem Fall kann es z. B. vorgesehen sein, daß das Fernsehgerät 10 mit Sicherheitsfunktion durch Steuerbefehle über den Sender des externen Empfängers 30 abgeschaltet wird. Dies kann eine vollständige Abschaltung betreffen oder eine Abschaltung nur des Programmplatzes des Senders, der die als kindergefährdend eingestufte Sendung ausstrahlt. Die Abschaltung kann nur vom berechtigten Benutzer, z. B. durch die Eingabe eines besonderen Kennworts, aufgehoben werden. Das besondere Kennwort kann dabei über den Fernbedienungsgeber 15 eingegeben werden, es kann aber auch vorgesehen sein, das besondere Kennwort mittels dem externen Empfänger 30 einzugeben und vom darin enthaltenen Sender an das Fernsehgerät 10 mit Sicherheitsfunktion übertragen zu lassen. Ebenso können Nachrichten oder Meldungen von dem externen Empfänger 30 erzeugt und gesendet werden, die auf der Bildröhre des Fernsehgeräts 10 mit Sicherheitsfunktion dargestellt werden können.

Besonders geeignet für die Realisierung des Funknetzes 40 sowie des Senders 22 und des externen Empfängers 30 ist die Verwendung von nach dem GSM-Standard arbeitenden Komponenten. In diesem Fall können die Meldungen des Fernsehgeräts 10 mit Sicherheitsfunktion als SMS-Nachrichten zum externen Empfänger 30 übertragen werden. Auch die Steuerbefehle des externen Empfängers 30 können in diesem Fall als SMS-Nachrichten an das Fernsehgerät 10 mit Sicherheitsfunktion übertragen werden. Eine Rufnummer des externen Empfängers 30 wird dabei im Fernsehgerät 10 mit Sicherheitsfunktion gespeichert, z. B. in einem Speicher des Senders oder im nichtflüchtigen Speicher 17. Ebenso kann eine Rufnummer des Senders 22 im externen Empfänger 30 gespeichert werden.

Bei dem beschriebenen Fernsehgerät 10 mit Sicherheitsfunktion sind neben der erwähnten Kindersicherung weitere Sicherheitsfunktionen möglich.
Beispielsweise können über einen Bus 61 Geräte 62 bis 64 mittels eines Ein/Ausgabebausteins 60 an das Fernsehgerät 10 mit Sicherheitsfunktion bzw. dessen Steuereinheit 18 angeschlossen sein, um über das Fernsehgerät 10 mit Sicherheitsfunktion und/oder den Sender 22 sowie den externen Empfänger 30 gesteuert zu werden. Beispielsweise können die Geräte 62 bis 64 Haushaltsgeräte, Küchengeräte, eine Alarmanlage usw. darstellen. Funktionsdaten der Geräte 62 bis 64, wie Statusmeldungen oder Alarmmeldungen, können von der Steuereinheit 18 im Speicher 16, 17 gesammelt werden. Bei Bedarf kann die Steuereinheit 18 eine Meldung erzeugen und über den Sender 22 und das Funknetz 40 an den externen Empfänger 30 senden.

Ebenso können Steuerbefehle mittels eines im externen Empfänger 30 vorgesehenen Sender über das Funknetz 40 an einen im Sender 22 vorgesehenen Empfänger gesendet werden, um über die Steuereinheit 18 und den Ein-/Ausgabebaustein 60 die am Bus 61 angeschlossenen Geräte 62 bis 64 zu steuern.

Bei dem beschriebenen Fernsehgerät 10 mit Sicherheitsfunktion kann als weitere Sicherheitsfunktion eine Meldung einer Ortsangabe erzeugt werden.

Zur Erzeugung der Meldung der Ortsangabe weist das Fernsehgerät 10 mit Sicherheitsfunktion eine Einrichtung 51, 52 zur Positionsbestimmung auf. Beispielsweise kann es sich dabei um einen GPS-Empfänger 52 mit Antenne 51 handeln. Über die vom GPS-Empfänger 52 ermittelte Position wird von der Steuereinheit 18 eine Meldung der Ortsangabe erzeugt und mittels Sender 22, 21 und Funknetz 40 an den externen Empfänger 30 gesendet. Die Steuereinheit 18 kann die Meldung der Ortsangabe beispielsweise bei der erstmaligen Inbetriebnahme des Fernsehgeräts 10 mit Sicherheitsfunktion erzeugen. Ebenso ist es möglich, daß die Steuereinheit 18 die Meldung der Ortsangabe immer dann erzeugt, wenn ein automatischer Sendersuchlauf gestartet wird, bei dem alle gegenwärtig zu empfangenden Fernsehsender durch das Fernsehgerät 10 ermittelt und in Programmplätzen gespeichert werden. Als weitere Möglichkeit bietet es sich an, immer dann eine Meldung der Ortsangabe durch die Steuereinheit 18 erzeugen zu lassen, wenn der GPS-Empfägner 52 eine von der bisherigen Position abweichende Position ermittelt.

Damit ist es jederzeit möglich, den Aufstellungsort des Fernsehgeräts 10 mit Sicherheitsfunktion zu ermitteln, um das Fernsehgerät 10 mit Sicherheitsfunktion z. B. nach einem Diebstahl wieder auffinden zu können. Mittels der oben beschriebenen Abschaltung des Fernsehgeräts 10 mit Sicherheitsfunktion durch Steuerbefehle über den Sender des externen Empfängers 30, kann das Fernsehgerät 10 mit Sicherheitsfunktion zudem für einen Dieb unbrauchbar gemacht werden. Zur Überwachung und Koordinierung kann es auch vorgesehen sein, daß die Meldung der Ortsangabe an eine Zentrale Stelle gesendet wird, z. B. einen Sicherheitsdienst oder den Hersteller des Fernsehgeräts 10 mit Sicherheitsfunktion.

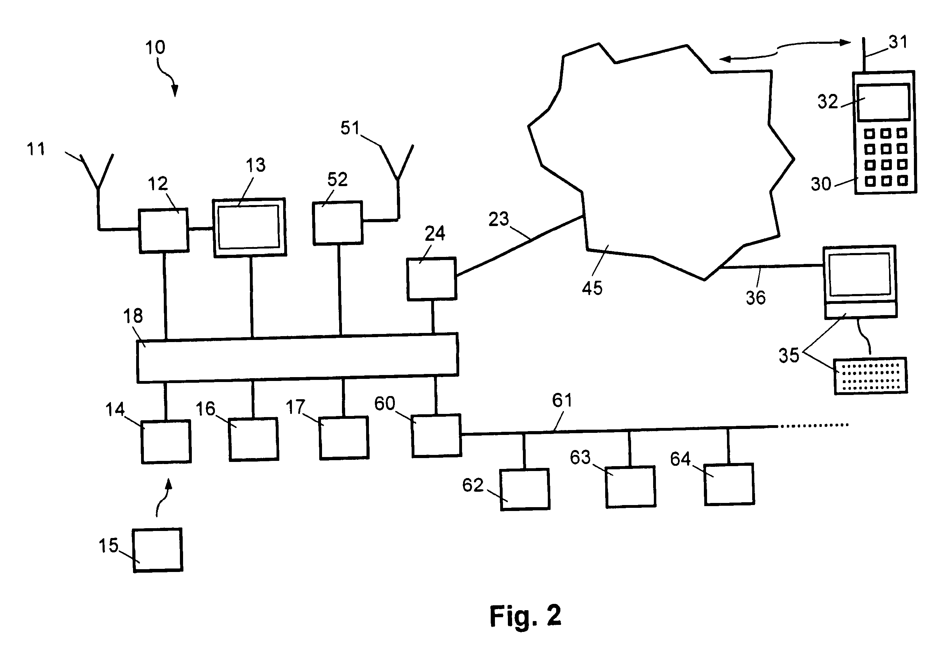

In Figur 2 ist ein Prinzipschaltbild einer weiteren Ausführungsform eines Fernsehgeräts mit Sicherheitsfunktion dargestellt.

Die Funktion und der Aufbau des Fernsehgeräts 10 mit Sicherheitsfunktion nach Figur 2 entsprechen im wesentlichen dem oben im Zusammenhang mit Figur 1 beschriebenen Fernsehgerät 10 mit Sicherheitsfunktion. Abweichend weist das Fernsehgerät 10 mit Sicherheitsfunktion nach Figur 2 jedoch einen Sender 24 auf, der über eine Leitung 23 mit einem Netzwerk 45 verbunden ist. Über das Netzwerk 45 werden Meldungen des Fernsehgeräts 10 mit Sicherheitsfunktion an den oben beschriebenen externen Empfänger 30 und/oder einen über eine Leitung 36 mit dem Netzwerk 45 verbundenen weiteren Empfänger 35 gesendet. Der weitere Empfänger 35 kann ebenfalls einen Sender enthalten um Steuerbefehle und/oder Nachrichten und Meldungen an einen im Sender 24 des Fernsehgeräts 10 mit Sicherheitsfunktion enthaltenen Empfänger zu senden.

Der Sender 24 kann beispielsweise als Modem ausgebildet sein und über eine Internetverbindung mit dem Empfänger 35, der als PC ausgebildet sein kann, verbunden sein. Die Meldungen werden dann als E-Mails ausgetauscht. Zur Verbindung mit dem externen Empfänger 30 kann in diesem Fall ein Internet-SMS-Service verwendet werden, bei dem E-Mails des Senders 24 in SMS-Nachrichten umgesetzt werden und umgekehrt. Wie oben beschrieben, werden Rufnummern bzw. Internetadressen gespeichert, um eine Verbindung zwischen Fernsehgerät 10 mit Sicherheitsfunktion und externem Empfänger 30, 35 aufbauen zu können.

Zur Anbindung an das Netzwerk 45 kann der Sender 24 auch nach dem ISDN-Standard ausgebildet sein. In diesem Fall kann auf die Einrichtung 51, 52 zur Positionsbestimmung verzichtet werden, da entsprechende Informationen in diesem Fall auch über die ISDN-Verbindung des Senders 24 ermittelt werden können.

Weitere Realisierungsmöglichkeiten der Verbindung zwischen dem Sender des Fernsehgeräts 10 mit Sicherheitsfunktion und dem externen Empfänger sind denkbar. So kann beispielsweise vorgesehen sein, daß das Fernsehgeräts 10 mit Sicherheitsfunktion statt einer Antenne 11 einen Anschluß an ein Kabelnetz aufweist. In diesem Fall kann der Sender des Fernsehgeräts 10 mit Sicherheitsfunktion über dieses Kabelnetz, gegebenenfalls über weitere Netzwerke, mit dem externen Empfänger in Verbindung stehen.

## Patentansprüche

1. Fernsehgerät zum Empfang von Fernsehsignalen, das mit einer Kindersicherung ausgestattet ist,
wobei das Fernsehgerät (10) eine Steuereinrichtung (18), eine Signalverarbeitungsschaltung (12), einen Sender (22), der nach einem GSM-Standard arbeitet und/oder Steuerbefehle als SMS-Nachricht überträgt, einen nichtflüchtigen Speicher (17) und eine Bildröhre (13) aufweist,
wobei
- die Signalverarbeitungsschaltung (12) Codes aus dem Fernsehsignal abtrennt, die Informationen über die Einstufung einer Sendung als kindergefährdend enthalten,
und
- die Kindersicherung in Form der Eingabe eines im nichtflüchtigen Speicher (17) gespeicherten Kennworts realisiert ist und wenn eine Codierung der Sendung als kindergefährdend vorliegt, die Wiedergabe der Sendung unterbleibt und die Steuereinrichtung (18) über die Signalverarbeitungsschaltung (12) eine Anzeige auf der Bildröhre (13) erzeugt, mit welcher der Benutzer des Fernsehgeräts (10) aufgefordert wird, das Kennwort einzugeben, damit die Wiedergabe der Sendung freigegeben werden kann,
**dadurch gekennzeichnet,**
**dass** die Steuereinrichtung (18) über den Sender (22) eine Meldung an einen externen Empfänger (30) sendet, wenn mehrfach ein Kennwort eingegeben wird, das nicht mit dem gespeicherten Kennwort übereinstimmt.

2. Fernsehgerät nach Anspruch 1,
**dadurch gekennzeichnet,**
**dass** die Meldung Angaben über Datum und/oder Uhrzeit der mehrfachen Eingabe des Kennworts, das nicht mit dem im nichtflüchtigen Speicher (17) gespeicherten Kennwort übereinstimmt, enthält.

3. Fernsehgerät nach Anspruch 1 oder 2,
**dadurch gekennzeichnet,**
**dass** eine Einrichtung (52) zur Bestimmung der Position des Fernsehgeräts (10) mit der Steuereinrichtung (18) verbunden ist.

4. Fernsehgerät nach Anspruch 3,
**dadurch gekennzeichnet,**
**dass** die Steuereinrichtung (18) eine Meldung erzeugt, mit der von der Einrichtung (52) zur Bestimmung der Position des Fernsehgeräts (10) ermittelten Positionsangabe des Aufstellungsorts des Fernsehgeräts (10).

5. Fernsehgerät nach einem der Ansprüche 1 bis 4,
**dadurch gekennzeichnet,**
**dass** ein Ein-/ Ausgabebaustein (60) mit der Steuereinrichtung (18) verbunden ist, an dem über eine Verbindung (61) Geräte (62, 63, 64), insbesondere Haushalts-, Küchen- und Alarmgeräte, angeschlossen sind, wobei die Steuereinrichtung (18) Meldungen über den Zustand der Geräte (62, 63, 64) erzeugt, bzw. die Geräte (62, 63, 64) steuert.

## Claims

1. Television set for receiving television signals which is fitted with a child safeguard,
wherein the television set (10) has a control device (18), a signal processing circuit (12), a transmitter (22) which works in accordance with a GSM standard and/or transmits control commands as SMS messages, a non-volatile memory (17) and a cathode ray tube (13),
wherein
- the signal processing circuit (12) separates codes which contain information relating to the categorisation of a programme as endangering children from the television signal,
and
- the child safeguard is realised in the form of the entry of a password stored in the non-volatile memory (17) and when the programme is coded as endangering children the programme is not shown and the control device (18) produces a message on the cathode ray tube (13) via the signal processing circuit (12) which requests the user of the television set (10) to enter the password so that the programme can be shown,
**characterised in that**,
the control device (18) sends a message to an external receiver (30) via the transmitter (22) when a password which does not match the saved password is entered multiple times.

2. Television set according to Claim 1,
**characterised in that**,
the message contains information relating to date and/or time of the multiple entry of the password which does not match the password stored in the non-volatile memory (17).

3. Television set according to Claim 1 or 2,
**characterised in that**,
a device (52) for determining the position of the television set (10) is connected to the control device (18).

4. Television set according to Claim 3,
**characterised in that**,
the control device (18) produces a message with the position information of the place of use of the television set (10) determined by the device (52) for determining the position of the television set (10).

5. Television set according to one of Claims 1 to 4,
**characterised in that**,
an input/output module (60) is connected to the control device (18), to which devices (62, 63, 64), in particular domestic appliances, kitchen appliances and alarm devices, are connected by means of a connection (61), wherein the control device (18) produces messages relating to the state of the devices (62, 63, 64) or controls the devices (62, 63, 64).

## Revendications

1. Récepteur de télévision pour la réception de signaux de télévision, qui est équipé d'une sécurité enfants,
le récepteur de télévision (10) présentant un dispositif de commande (18), un circuit de traitement de signal (12), un émetteur (22), qui travaille selon un standard GSM et/ou transmet des instructions de commande sous forme de message SMS, une mémoire (17) non volatile et un tube cathodique (13),
- le circuit de traitement de signal (12) séparant des codes du signal de télévision, qui contiennent des informations sur le classement d'une émission comme dangereuse pour les enfants, et
- la sécurité enfants étant réalisée sous forme de l'entrée d'un mot de passe mémorisé dans la mémoire (17) non volatile et, lorsqu'un codage de l'émission qualifié de dangereux pour les enfants est présent, la restitution de l'émission est interdite et le dispositif de commande (18) génère par le circuit de traitement de signal (12) un affichage sur le tube cathodique (13), avec lequel l'utilisateur du récepteur de télévision (10) est invité à entrer le mot de passe pour que la restitution de l'émission puisse être autorisée,
**caractérisé en ce que**
le dispositif de commande (18) envoie par l'émetteur (22) un message à un récepteur (30) externe lorsqu'on entre plusieurs fois un mot de passe qui ne correspond pas au mot de passe mémorisé.

2. Récepteur de télévision selon la revendication 1,
**caractérisé en ce que**
le message contient des indications sur la date et/ou l'heure de l'entrée multiple du mot de passe qui ne correspond pas avec le mot de passe mémorisé dans la mémoire (17) non volatile.

3. Récepteur de télévision selon la revendication 1 ou 2,
**caractérisé en ce qu'**un dispositif (52) destiné à la détermination de la position du récepteur de télévision (10) est relié au dispositif de commande (18).

4. Récepteur de télévision selon la revendication 3,
**caractérisé en ce que** le dispositif de commande (18) génère un message, avec l'indication de position, déterminée par le dispositif (52) pour la détermination de la position du récepteur de télévision (10), du lieu d'emplacement du récepteur de télévision (10).

5. Récepteur de télévision selon l'une des revendications 1 à 4,
**caractérisé en ce**
**qu'**un module d'entrée/sortie (60) est relié au dispositif de commande (18), module auquel sont raccordés par une liaison (61) des appareils (62, 63, 64), en particulier des appareils ménagers, des appareils de cuisine et des appareils d'alarme, le dispositif de commande (18) générant des messages sur l'état des appareils (62, 63, 64) et/ou commandant les appareils (62, 63, 64).
